(19) Europäisches Patentamt

European Patent Office

Office européen des brevets

(11) Publication number: **0 237 497 B1**

(12) **EUROPEAN PATENT SPECIFICATION**

(45) Date of publication of patent specification: **25.11.92**   (51) Int. Cl.⁵: **B23B  31/30**

(21) Application number: **87830079.7**

(22) Date of filing: **03.03.87**

(54) **Tool locking device for machine tools.**

(30) Priority: **11.03.86 IT 1971286**

(43) Date of publication of application:
**16.09.87 Bulletin  87/38**

(45) Publication of the grant of the patent:
**25.11.92 Bulletin  92/48**

(84) Designated Contracting States:
**BE CH DE FR GB LI SE**

(56) References cited:
**CH-A- 432 976        DE-A- 2 936 639**
**US-A- 2 153 971        US-A- 2 475 519**
**US-A- 2 574 754        US-A- 3 533 636**
**US-A- 3 684 303**

(73) Proprietor: **Ferraro, Antonio**
**Via Saffi, 17**
**Milano(IT)**

(72) Inventor: **Ferraro, Antonio**
**Via Saffi, 17**
**Milano(IT)**

(74) Representative: **Pizzoli, Pasquale et al**
**c/o Società Italiana Brevetti Via G. Carducci**
**8**
**I-20123 Milano(IT)**

EP 0 237 497 B1

## Description

The present invention relates to a device for actuating a grip head of a spindle of a machine tool.

Known already are tools'locking devices in a chuck of a machine tool which generally comprise an axially sliding member suitable to be made fast to the tool, an axially stationary member and an expander capable of axial displacement within the sliding member and suitable to push locking balls against an abutting surface of the stationary member through prosper apertures in the sliding member; a spring system drives the device into a locking position while the unlocking is effected by an actuating hydraulic piston. A locking device of this kind according to the preamble of claim 1 is described in DE-C-2741166.

Such known device presents some drawbacks one of which is represented for example by the fact that the locking balls, having a substantially point-like bearing on the expander's surface of the locking device and on the opposing surface of the axially stationary member, exert a very high localized pressure so that they usually cause a deformation of the contacting surfaces with the consequence that, after a certain period of operation, the tool attachment loses the required stiffness.

Another drawback of the said known device is that the balls, which are at least six, require high manufacturing cost specially because of the high risk of errors in the manufacture. Moreover, the use of many balls causes a poor capability of the device to offset possible concentricity errors existing in the rotating member by mean of an appropriate angular orientation of the sliding member.

A further disadvantage of the above mentioned known locking device is that the balls exert their locking activity with a radial motion towards the rotation axis of the device i.e. in the direction opposite to the centrifugal force of the rotating spindle.

It is the object of the present invention to provide a locking device of the above mentioned kind without the said drawbacks and disadvantages. This object is achieved with a locking device wherein the number of the balls or rolls is reduced to three only and their motion takes place on races formed on the external surface of the expander in such a way that when moving to the locking position they radially move away from the rotation axis of the device.

The device according to the present invention offers other advantages and novel features with respect to the prior art which will emerge from the following detailed description of an embodiment thereof made with reference to the annexed drawings, wherein:

**Fig. 1** shows an axial, cross section view of the device according to the present invention in operating condition;

**Fig. 2** shows an enlarged, longitudinal cross section view along the expander member of the device of Fig. 1;

**Fig. 3** shows a cross section view along the line 3-3 of Fig. 2;

**Fig. 4** shows a cross section view along the line 4-4 of Fig. 2;

**Fig. 5** is an enlarged view of a longitudinal cross section along the rotating member of the device of Fig. 1;

**Fig. 6** is a front view from the direction 6 of the member illustrated in Fig. 5;

**Fig. 7** is a partial cross section, along the line 7-7 of Fig. 5; and

**Fig. 8** shows an axial cross section similar to that of Fig. 1, but wherein the device is shown in its unlocked condition.

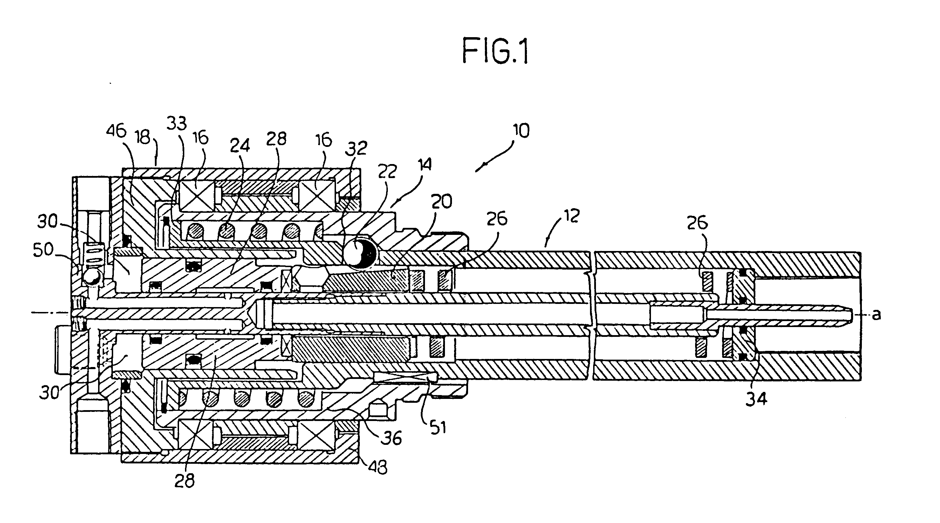

With reference to Fig. 1, the device according to the present invention comprises an axially slidable member 12, hereinafter called slidable member, which is destined to be connected by customary means (not shown) to the locking tool's collet of a machine tool. Around the slidable member 12, and coaxially therewith, there is a member 14 which is not susceptible of axial displacement, but only of a rotatory movement, hereinafter briefly called the rotating member 14. In the particular embodiment shown in the drawing, the rotating member 14 may rotate around the axis a and supports, by means of bearings 16, a fixed member 18 which is also not susceptible of axial displacement neither of any rotatory movement. A locking member or expander 20 is also susceptible of axial displacement along the axis a and it is housed inside the sliding member 12 in order to cooperate with three wedging means in the form of metal balls.

Between the sliding member 12 and the rotating member 14 is placed a helical spring 24 having one end abutting upon the flange 33 of the sliding member 12 and the other end abutting upon a shoulder 36 of the rotating member 14. Between the sliding member 12 and the expander 20 is placed a spring 26, preferably of the helical type, having one end abutting directly upon the expander 20 and the other end abutting upon a shoulder 34 of the sliding member 12.

Inside the rotating member 14 and aligned with the sliding member 12 there is an unlocking piston 28 susceptible of an axial movement along the axis a driven by fluid introduced in the chamber 30.

The sliding member 12 has a substantially tubular shape and, from the side accommodating in its interior the expander 20, is provided with openings or passing through slots 32 suitably spaced among each other along a circumference. The size of said apertures 32 are chosen so as to accomodate with a certain free play the three wedging means 22, generally in the form of balls or rollers. At one end, on the left hand side of Fig. 1, the sliding member 12 presents a flange 33 serving as an abutment of the spring 24. At the opposite end, on the right hand side of Fig. 1, the sliding member 12 presents a shoulder 34 projecting towards the interior serving as an abutment of the spring 26.

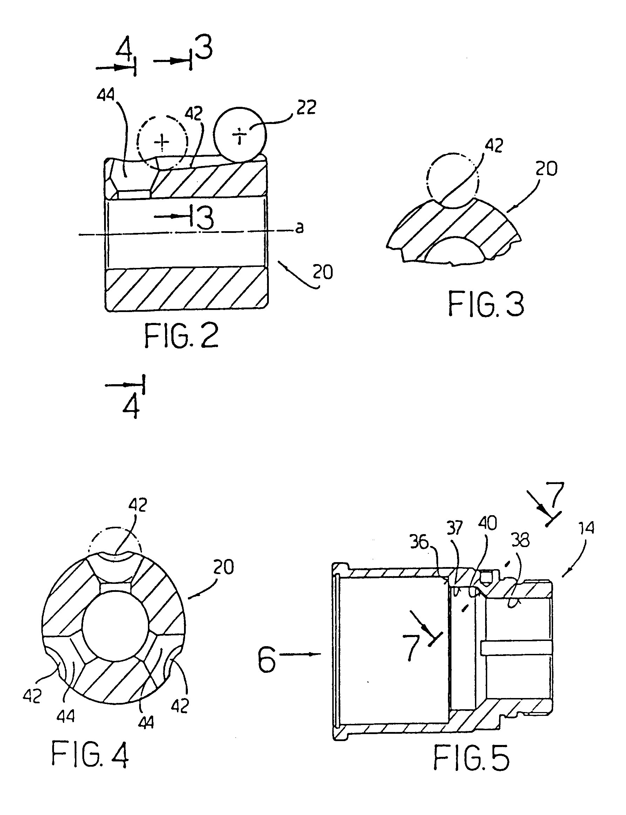

With reference to figures 2, 3 and 4, it may be observed that the expander or locking member 20 has a tubular shape having on the external surface the race tracks 42 for the rolling of the balls 22. The races 42 are angularly spaced among each other along a circumference similarly to the passing through slots 32 present in the sliding member 12. Each of the race tracks 42 connects one end of the expander 20 to a slot 44 designed to accommodate the wedging means 22. The races 42 have a depth increasing in the direction toward the slots 44 so that they appear slightly sloping down from the end of the expander 20 toward the slots 44. When the wedging means 22 are in the form of balls, the races 42 are channel-like and have their cross section shaped as an arc of circumference with radius substantially equal to that of the balls 22. When, instead, the wedging means 22 are in the form of rollers, the races 42 are simply inclined planes. In both instances, the contact between the wedging bodies and the surface of the races does not take place over very limited areas, almost point-like, but over substantially extended areas in accordance with the main characteristic of the present invention. In such a way, the wearing of parts in contact is decisively reduced, thus avoiding the main cause of undesirable loss of stiffness of the connection between the locking device and the tool.

The slots 44 have the shape of spherical caps when the wedging bodies 22 are balls (as shown in the annexed drawings) and have a semi-cylindrical form when the bodies 22 are rollers.

With reference to Figures 5, 6 and 7, it is observed that also the rotating organ 14 has a substantially tubular shape and its interior presents a shoulder 36 serving as abutment of the right hand extremity of the sprang 24. Adjacent to the shoulder 36, there is a cylindrical surface 37, linked to a cylindrical surface of lesser diameter 38 by the conical surface 40. This conical or tapered surface 40, called the abutting surface, is provided with seats 41 suitably spaced along a circumference similarly and with the same spacing of the passing through slots 32 of the sliding member 12 and of the races 42 of the expander 20. Dimensions and shape of the seats 41 are chosen in function of the dimensions and of the shape of the wedging bodies 22. If these are in the form of balls, as in the embodiments shown in the drawings annexed hereto, the seats 41 are shaped as spherical caps with radius substantially corresponding to the radius of the balls. The seats 41 are instead planar sections machined in the conical wall 40 when the bodies 22 are in the form of rollers.

Making reference again to Fig. 1, it is observed that the fixed member 18 is composed essentially of a boxlike member 46 provided with a cylindrical tubolar extension accommodating the piston 28, of a member 48 acting as a cover of said boxlike member 46, and of an end member 50.

As already said hereinabove, the stationary member 18 is the only one which is not susceptible of movements during operation of the device in accordance with the present invention. The member 12 is susceptible of axial movement as well as of a rotatory movement because it is placed partially inside the rotating member 14 to which is connected by a spline 51. The expander 20, housed inside the portion of the sliding member 12 located inside the rotating member 14, is also susceptible of rotatory movement. The piston 28 is only susceptible of axial movement and a bearing 53 is placed between the piston and the expander 20.

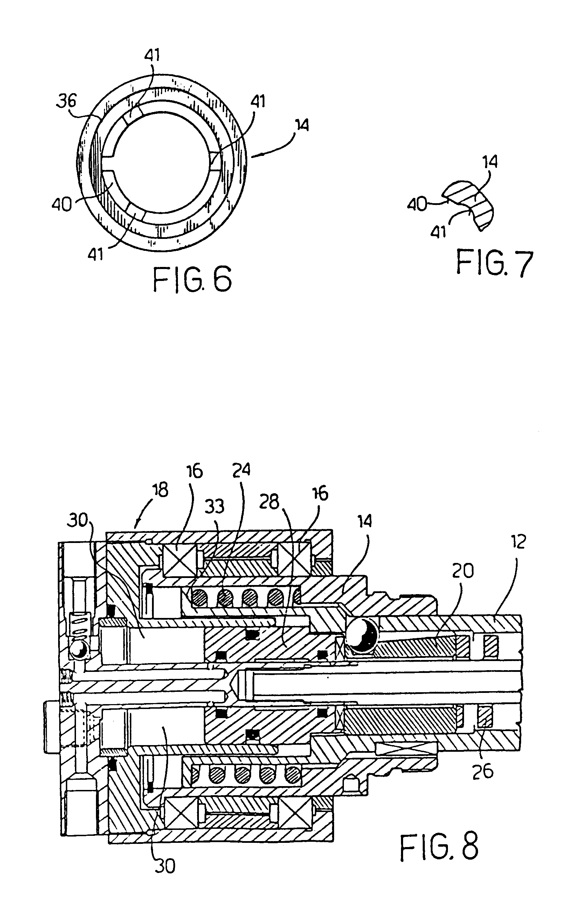

The operation of the device according to the present invention will now be described with reference to Figures 1 and 8. In Fig. 8, the device is shown in rest position, that is unlocked and ready to lock the tool. In such a condition, the balls 22 are in the slots 44 of the expander 20 and therefore they do not project radially beyond the external surface of the sliding member 12; therefore, they do not engage the rotating member 14 and therefore the member 12 is free to slide axially inside the rotating member 14. The device is kept in this unlocked condition by the pressure of the fluid inside the chamber 30 which, opposing the action of the springs 24 and 26, pushes the piston 28 against the expander 20. The fluid under pressure may be introduced in the chamber 30 by any suitable means which, therefore, does not require a detailed description.

In order to bring the device to its locking position, shown in Fig. 1, suitable control means are acted upon in such a way that the piston 28 is no longer pushed by the fluid. The piston 28, therefore, no longer pushed by the pressure of the fluid towards the right hand side of the figure, begins its displacement towards the left hand side under the thrust of the springs 26 and 24. The expander 20 is also pushed towards the left hand side of the figure by the spring 26 and the balls 22 drag toward the left hand side the member 12. The balls 22 come out of the slots 44 and, rolling along the inclined races 42, are pushed radially against the rotating member 14 and precisely against its internal surface 40, called the abutment surface. At the end of the run towards the left hand side of the expander 20, the balls 22 wedge inside the suitable seats 41 present on the abutment surface 40. At this point, the device is in its locking position and rigidly locks the tool inserted in the chuck of the machine tool. For unlocking the tool, fluid under pressure is let into the chamber 30 and the device returns to the position previously described with reference to Fig. 8.

It is to be noted that the three balls 22, or other equivalent wedging bodies, when passing from their resting position, that is unlocking position shown in Fig. 8, to the working or locking position shown in Fig. 1, spread themselves radially outwards from the axis a of the device. Consequently, during rotation of the chuck of the machine tool, the balls 22 exert an increased centrifugal force which contributes to ensure maintenance of a perfect locking of the tool. This is an advantageous feature of the device according to the present invention with respect to the above mentioned known devices wherein the balls or equivalent wedging bodies approach the axis a of the device when passing from the resting to operating position.

The locking device according to the present invention can be obviously used also for locking the workpiece on a machine tool.

## Claims

1. A device for actuating a grip head of a spindle of a machine tool by means of a sliding member (12) under the action of springs (26, 24), comprising an expander (20) housed inside the sliding member (12) and provided with wedging bodies (22) apt to engage a rotating member (14) coaxially assembled over the sliding member (12) and inside a fixed member (18) housing a piston (28) capable of pushing the expander (20) causing the disengagement of the sliding member (12) from the rotating member (14), and therefore the unlocking of the tool or of the workpiece, by displacing the wedging bodies (22) from a working position to a resting position by rolling along inclined races located on the external surface of the expander (20), characterized in that the wedging bodies (22) are three and their motion takes place on races (42) formed on the external surface of the expander (20) in such a way that when moving to the locking position the bodies (22) move away from the rotation axis of the device.

2. The device according to claim 1, wherein in the resting position the three wedging bodies (22) occupy three slots (44) located inside the expander (20).

3. The device according to claim 1 or 2, wherein the operating position the three wedging bodies (22) pass through three radial openings (32) of the sliding member (12) and occupy seats (41) inside the rotating member (14).

4. The device according to claim 2 or 3, wherein the three seats (41) of the three wedging bodies (22), in operating position, have a distance from the axis (a) of the device greater than that of the rest slots (44).

5. The device according to claim 2, wherein the wedging bodies (22) are balls and the races (42) are channels having a section shaped as a circular arc of radius substantially equal to the radius of the balls.

6. The device according to claim 2, wherein the wedging bodies (22) are rollers and the races (42) are flat surfaces onto which the rollers bear along a generatrix thereof.

7. The device according to claim 5, wherein the seats or slots (44, 41) of the balls are spherical caps having a radius substantially equal to the radius of the balls.

8. The device according to claim 6, wherein the seats (44, 41) of the rollers are substantially semi-cylindrical notches having a radius and a height substantially equal to those of the rollers.

## Patentansprüche

1. Vorrichtung zum Betätigen eines Griffkopfes einer Spindel einer Werkzeugmaschine mit Hilfe eines Gleitelementes (12) unter der Wirkung von Federn (26, 24) mit einer Ausdehnvorrichtung (20), die innerhalb des Gleitelementes (12) angeordnet und mit Verkeilungskörpern (22) versehen ist, die mit einem rotierenden Element (14) in Eingriff treten können, das koaxial über dem Gleitelement (12) montiert ist, sowie innerhalb eines festen Elementes (18), das einen Kolben (28) beherbergt, der die Ausdehnvorrichtung (20) unter Druck setzen kann, um somit den Eingriff des Gleitelementes (12) mit dem rotierenden Element (14) zu lösen und dadurch das Werkzeug oder das Werkstück zu entriegeln, indem die Verkeilungskörper (22) durch Rollen entlang geneigten Laufringen, die an der Außenfläche der Ausdehnvorrichtung (20) vorgesehen sind, von einer Arbeitsstellung in eine Ruhestellung verschoben werden, dadurch gekennzeichnet, daß drei Verteilungskörper (22) vorgesehen sind und daß deren Bewegung auf Laufringen (42) stattfindet, die auf der Außenfläche der Ausdehnvorrichtung (20) ausgebildet sind, derart, daß sich bei einer Bewegung in die Verriegelungsstellung die Verkeilungskörper (22) von der Drehachse der Vorrichtung wegbewegen.

2.  Vorrichtung nach Anspruch 1, bei der die drei Verkeilungskörper (22) in der Ruheposition drei Schlitze (44) besetzen, die innerhalb der Ausdehnvorrichtung (20) angeordnet sind.

3.  Vorrichtung nach Anspruch 1 oder 2, bei der die drei Verkeilungskörper (22) in der Betriebsstellung drei radiale Öffnungen (32) des Gleitelementes (12) passieren und Sitze (41) innerhalb des rotierenden Elementes (14) einnehmen.

4.  Vorrichtung nach Anspruch 2 oder 3, bei der die drei Sitze (41) der drei Verkeilungskörper (22) in der Betriebsstellung einen Abstand von der Achse (a) der Vorrichtung besitzen, der größer ist als der der Ruheschlitze (44).

5.  Vorrichtung nach Anspruch 2, bei der die Verkeilungskörper (22) Kugeln und die Laufringe (42) Kanäle sind, die einen Abschnitt aufweisen, der als Kreisbogen mit einem Radius ausgebildet ist, der im wesentlichen dem Radius der Kugeln entspricht.

6.  Vorrichtung nach Anspruch 2, bei der die Verkeilungskörper (22) Rollen und die Laufringe (42) ebene Flächen sind, auf denen die Rollen entlang einer Erzeugenden derselben gelagert sind.

7.  Vorrichtung nach Anspruch 5, bei der die Sitze oder Schlitze (44, 41) der Kugeln kugelförmige Kappen sind, die einen Radius aufweisen, der im wesentlichen dem Radius der Kugeln entspricht.

8.  Vorrichtung nach Anspruch 6, bei der die Sitze (44, 41) der Rollen im wesentlichen halbzylindrische Einkerbungen sind, die einen Radius und eine Höhe besitzen, die im wesentlichen denen der Rollen entsprechen.

**Revendications**

1.  Dispositif pour actionner une tête de serrage d'une broche de machine-outil au moyen d'un élément coulissant (12) sous l'action de ressort (26, 24), comprenant un dispositif d'expansion (20) logé à l'intérieur de l'élément coulissant (12) et équipé de pièces de coincement (22) susceptibles de venir en prise avec un élément rotatif (14) assemblé en position coaxiale avec l'élément coulissant (12) et placé à l'intérieur d'un élément fixe (18) dans lequel est logé un piston 28 capable de pousser l'élément d'expansion (20) en provoquant le dégagement de l'élément coulissant (12) par rapport à l'élément rotatif (14), et par conséquent le deserrage de l'outil ou de la pièce, en déplaçant les éléments de coincement (22) d'une position de travail à une position de repos en les faisant rouler le long de pistes inclinées formées sur la surface extérieure du dispositif d'expansion (20), caractérisé en ce que les éléments de coincement (22) sont au nombre de trois, et en ce que leur mouvement se fait sur des pistes (42) formées sur la surface extérieure du dispositif d'expansion (20) de façon qu'en se déplaçant vers leur position de serrage les éléments (22) s'éloignent de l'axe de rotation du dispositif.

2.  Dispositif selon la revendication 1, dans lequel les trois éléments de coincement (22) en position de respos occupent trois fentes (44) situées à l'intérieur de l'élément d'expansion (20).

3.  Dispositif selon la revendication 1 ou 2, dans lequel les trois éléments de coincement (22) en position fonctionnelle, traversent trois ouvertures radiales (32) de l'élément coulissant (12) et occupent des sièges (41) à l'intérieur de l'élément rotatif (14).

4.  Dispositif selon la revendication 2 ou 3, dans lequel les trois sièges (41) des trois éléments de coincement (22) dans leur position de fonctionnement, ont une distance par rapport à l'axe (a) du dispositif supérieure à la distance des trois fentes de repos (44).

5.  Dispositif selon la revendication 2, dans lequel les éléments de coincement (22) sont des billes et les pistes (42) sont des gouttières ayant une section en forme d'arc circulaire dont le rayon est sensiblement égal au rayon des billes.

6.  Dispositif selon la revendication 2, dans lequel les éléments de coincement (22) sont des rouleaux et les pistes (42) sont des surfaces planes sur lesquelles les rouleaux appuient le long d'une de leur génératrice.

7. Dispositif selon la revendication 5, dans lequel les sièges ou fentes (44, 41) des billes sont des capsules sphériques ayant un rayon sensiblement égal au rayon des billes.

8. Dispositif selon la revendication 6, dans lequel les sièges (44, 41) des rouleaux sont sensiblement des encoches semi-cylindriques ayant un rayon et une hauteur sensiblement égaux à ceux des rouleaux.

FIG.1

FIG. 2

FIG. 3

FIG. 4

FIG. 5

FIG. 6

FIG. 7

FIG. 8